# EUROPEAN PATENT SPECIFICATION

(11) **EP 3 089 334 B1**
(45) Date of publication and mention of the grant of the patent: **26.06.2019**
(21) Application number: 14875320.5
(22) Date of filing: 25.12.2014
(51) Int. Cl.: H02K 11/00, B60S 1/08, H02K 9/22, B60S 1/04

(54) **WIPER MOTOR**
SCHEIBENWISCHERMOTOR
MOTEUR D'ESSUIE-GLACE

(30) Priority: 25.12.2013 JP 2013267087; 18.12.2014 JP 2014256084
(43) Date of publication of application: 02.11.2016
(73) Proprietor: Mitsuba Corporation, Kiryu-shi, Gunma 376-8555 (JP)
(72) Inventor: KIMURA, Masaaki, Kiryu-shi Gunma 376-8555 (JP); ISO, Yukiyoshi, Kiryu-shi Gunma 376-8555 (JP); SHODA, Hirokazu, Kiryu-shi Gunma 376-8555 (JP); IKEDA, Hironori, Kiryu-shi Gunma 376-8555 (JP)
(74) Representative: de Kernier, Gabriel
(86) International application number: PCT/JP2014/084220
(87) International publication number: WO 2015/099002

(56) References cited:
- EP-A1- 2 256 016
- EP-A2- 2 354 550
- WO-A1-2006/034508
- WO-A1-2010/034440
- DE-A1- 10 153 173
- JP-A- 2005 168 133
- JP-A- 2007 060 775
- JP-A- 2007 097 352
- JP-A- 2007 097 352
- JP-A- 2009 010 082
- JP-A- 2010 288 383
- JP-A- 2012 210 068

## Description

### TECHNICAL FIELD

The present invention relates to a wiper motor which subjects a wiper member to swinging drive.

### BACKGROUND ART

Conventionally, a vehicle such as automotive vehicle is equipped with a wiper apparatus which wipes off extraneous matters such as rainwater on a windshield provided to a vehicle body, and ensures a field of view from a driver or others through the windshield. As examples of a wiper apparatus to be mounted on the vehicle, a wiper apparatus which subjects a pair of wiper arms to swinging drive by one wiper motor via a link mechanism is known as tandem type, and a wiper apparatus which subjects a pair of wiper arms to swinging drive by respective wiper motors provided to the left/right parts of the vehicle is known as opposed-wiping-type. Among these wiper apparatuses, since the opposed-wiping-type wiper apparatus is not provided with a link mechanism, this wiper apparatus has an advantage of being reduced in installation space of the link mechanism in vehicle, thereby ensuring shock absorbing space and expanding the possibility of vehicle design.

A wiper motor used in such an opposed-wiping-type wiper apparatus is described in, for example, Patent Document 1. The wiper motor described in Patent Document 1 is provided with an electric motor which is rotated forward/reversely, and the rotation of this electric motor are reduced by a worm and a worm wheel (speed reduction mechanism part) provided in a gear case. The speed reduction mechanism part is rotatably housed in the gear case, and an opening portion of the gear case is hermetically sealed by a case cover having a circuit board attached to the inner side thereof. In addition, heat of electronic components mounted on the circuit board is dissipated to outside via a cooling fin member inserted (buried) in the case cover.

As another example, Patent Document 2 discloses a windshield wiper drive which comprises a drive motor for driving in particular a windshield wiper, an electric circuit associated with the drive motor, and a heat-conducting element for heat dissipation from the electrical circuit to a heat sink of the housing.

As another example, Patent Document 3 discloses an electric-motor auxiliary drive for vehicle, which comprises: a shaft having a first shaft end supported in an interior of a gearbox housing and a second shaft end extending out from said gearbox housing; and an electronic control unit mounted with electrical components.

As another example, Patent Document 4 discloses an electric motor in which a circuit board and a worm gear mechanism for reducing a motor rotation are accommodated in a gear housing.

### RELATED ART DOCUMENTS

### PATENT DOCUMENTS

Patent Document 1: Japanese Patent Application Laid-Open Publication No. 2008-103619
Patent Document 2: DE10153173A1
Patent Document 3: WO2010/034440A1
Patent Document 4: JP2008-103619

### DISCLOSURE OF THE INVENTION

### PROBLEMS TO BE SOLVED BY THE INVENTION

In addition, because of diversification and the like in type of a vehicle to which the wiper motor is applied, it is required to reduce the size while enhancing the output power of the wiper motor. Therefore, in order to solve this problem, cooling efficiency of the wiper motor has to be improved as much as possible. However, according to the technique described in Patent Document 1, since the size of the case cover depends on the size of the cooling fin member, and improvement in downsizing of the wiper motor adversely reduces cooling efficiency thereof. Furthermore, since the cooling fin member is inserted in the case cover via a complicated molding operation using a plurality of molds, the conventional wiper motor encounters a problem that assembly workability thereof is low.

It is an object of the present invention to provide a wiper motor which can be improved in assembly workability, and improved in size and cooling efficiency.

### MEANS FOR SOLVING THE PROBLEMS

According to one aspect of the present invention, there is provided a wiper motor which subjects a wiper member to swinging drive, comprising: a motor having a rotation shaft; a speed reduction mechanism part for reducing a rotation of the rotation shaft; a controller having a circuit board on which a plurality of electronic components are mounted, and adapted to control a rotation of the motor; a housing in which the speed reduction mechanism part is housed; a case cover having an inner face to which the controller is attached, and closing an opening of the housing; and a thermally- conductive member provided between the circuit board and the housing and adapted to release heat to the housing from the electronic components.

According to another aspect of the present invention, the housing has a portion opposed to the thermally-conductive member, and provided with a heat dissipation fin for releasing heat to outside from the thermally-conductive member.

According to another aspect of the present invention, an elastic member having thermal conductivity is provided between the housing and the thermally-conductive member.

According to another aspect of the present invention, the electronic components includes a drive element for driving the motor, and a control element for controlling the drive element, and the thermally-conductive member is adapted to release heat to the housing from the drive element and the control element.

According to another aspect of the present invention, the drive element is mounted on a first surface of the circuit board; the control element is mounted on a second surface of the circuit board; the thermally-conductive member is provided on the same side as the first surface of the circuit board; and the control element is located closer to the housing than the drive element.

According to another aspect of the present invention, the thermally-conductive member is made of aluminum.

According to another aspect of the present invention, the thermally-conductive member is made of ceramic.

### EFFECTS OF THE INVENTION

According to the present invention, the thermally-conductive member is provided between the housing and the circuit board mounted with electronic components, and the thermally-conductive member is used to release heat of the electronic components to the housing. Therefore, heat of the electronic components can be dissipated to outside via the thermally-conductive member and the housing.

Therefore, since the housing is made of for example aluminum which is excellent in thermal conductivity, heat of the electronic components can be effectively dissipated from the entire housing having a comparatively-large surface area. Consequently, a wiper motor is improved in assembly workability and improved in size and cooling efficiency.

Furthermore, in a conventional structure, a cooling fin member is inserted in the case cover. On the other hand, according to the present invention, it is not necessary to insert a cooling fin member in the case cover. Therefore, the case cover can be molded with ease, and consequently, the wiper motor can be improved in assembly workability.

### BRIEF DESCRIPTION OF THE DRAWINGS

FIG. 1 is an explanatory view explaining a mounted state of wiper apparatuses mounted on a vehicle body, and each provided with a wiper motor according to the first embodiment of the present invention;
FIG. 2 is a plan view showing a front side (output shaft side) of the wiper motor of FIG. 1;
FIG. 3 is a plan view showing a back side (cover side) of the wiper motor of FIG. 1;
FIG. 4 is a cross-sectional view taken along a line A-A of FIG. 2;
FIG. 5 is a cross-sectional view taken along a line B-B of FIG. 2;
FIG. 6 is a partial enlarged view of a portion surrounded by a broken-line-circle "C" of FIG. 5;
FIG. 7 is a perspective view showing an inner side of a case cover (with a circuit board removed);
FIG. 8 is a partial enlarged view comparing the size of the wiper motor of the first embodiment with the size of a wiper motor of a second embodiment;
FIG. 9 is a drawing of the wiper motor according to the second embodiment of the present invention, corresponding to FIG. 5;
FIG. 10 is a partial enlarged view of a portion surrounded by a broken-line circle "D" of FIG. 9; and
FIG. 11 is an exploded perspective view showing the inner side of a case cover of the wiper motor of FIG. 9.

### DESCRIPTION OF THE PREFERRED EMBODIMENTS

Hereinafter, a first embodiment of the present invention will be described in detail with reference to the accompanying drawings.

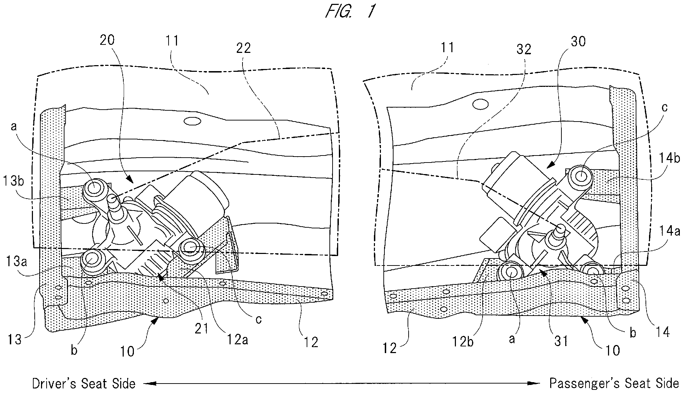

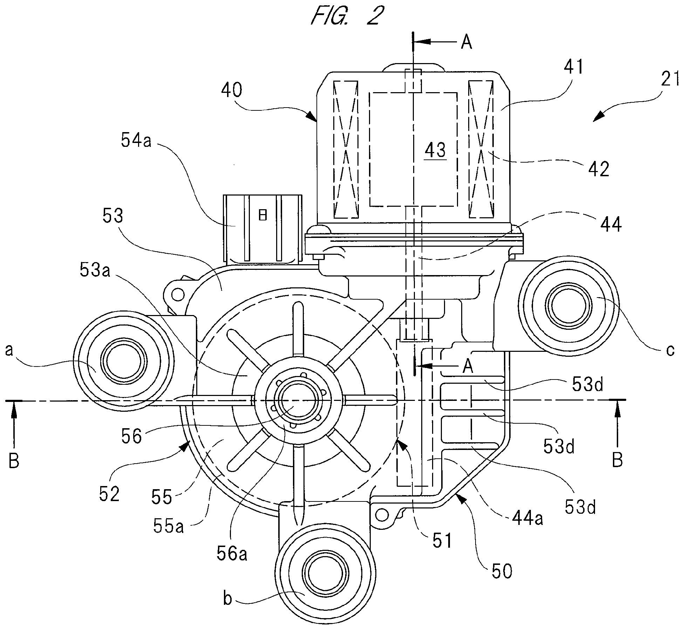

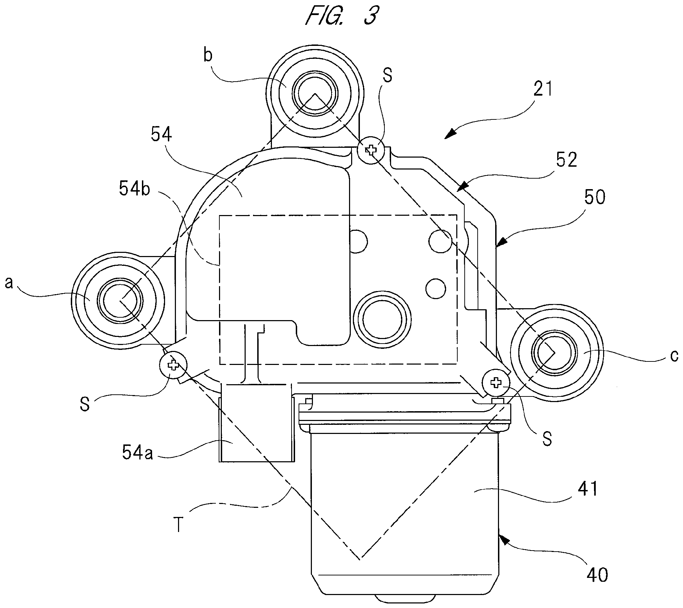

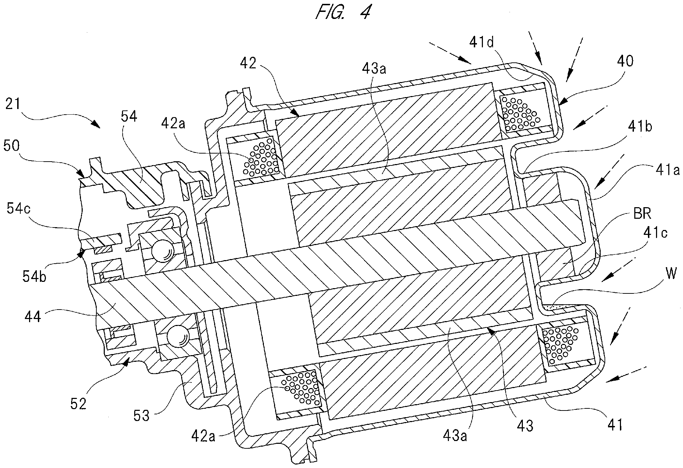

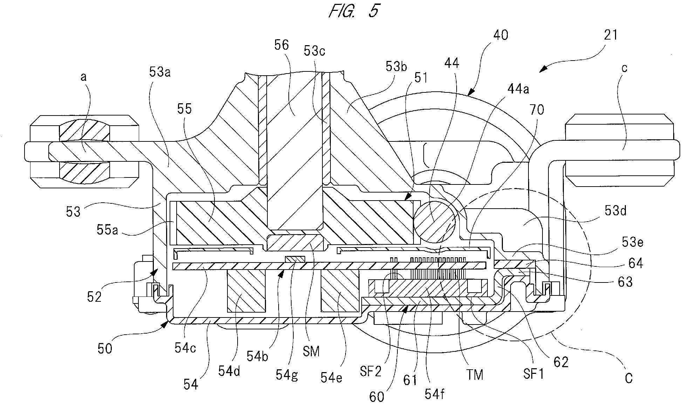

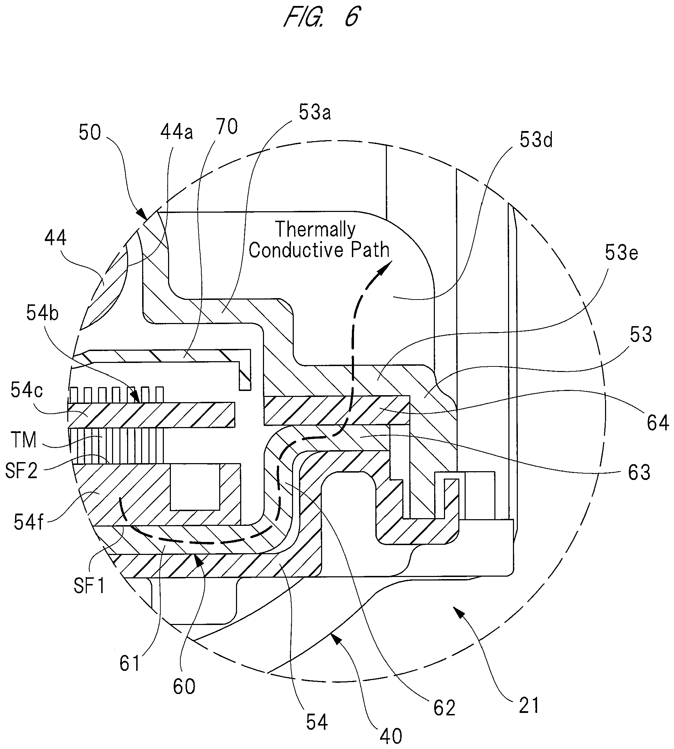

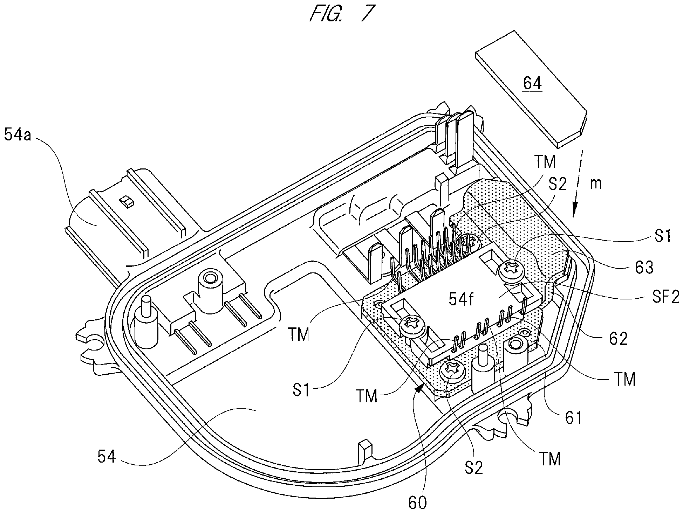

FIG. 1 is an explanatory view explaining a mounted state of wiper apparatuses mounted on a vehicle body, and each provided with a wiper motor according to the first embodiment of the present invention; FIG. 2 is a plan view showing a front side (output shaft side) of the wiper motor of FIG. 1; FIG. 3 is a plan view showing a back side (cover side) of the wiper motor of FIG. 1; FIG. 4 is a cross-sectional view taken along a line A-A of FIG. 2; FIG. 5 is a cross-sectional view taken along a line B-B of FIG. 2; FIG. 6 is a partial enlarged view of a portion surrounded by a broken- line-circle "C" of FIG. 5; and FIG. 7 is a perspective view showing an inner side of the case cover (with a circuit board removed).

As shown in FIG. 1, a front glass 11 as a windshield is provided on a front side of a vehicle body 10 forming part of a vehicle such as automotive vehicle. A DR-side wiper apparatus 20 and an AS-side wiper apparatus 30 are respectively mounted on a driver's-seat-side part and an assistant-driver's-seat-side part along a vehicle-width direction (left-right direction in the drawing) of the vehicle body 10 in a front end side (lower side in the drawing) of the front glass 11. That is, a wiper apparatus according to the present embodiment employs an opposed-wiping-type wiper apparatus provided with wiper apparatuses respectively disposed on the driver's seat side and the assistant-driver's seat side. Here, the term "DR-side" represents the driver's seat side, and the term "AS-side" represents the assistant-driver's seat side.

The DR-side wiper apparatus 20 and the AS-side wiper apparatus 30 are respectively provided with a DR-side wiper motor 21 and an AS-side wiper motor 31. The wiper motors 21 and 31 are configured to respectively subject a DR-side wiper arm 22 and an AS-side wiper arm 32 (not shown in detail) to swinging drive within the range of a predetermined swing angle. As a result, wiper blades (not shown) provided respectively at distal ends of the wiper arms 22 and 32 carry out reciprocating wiping operations on the front glass 11 so as to consequently wipe off rainwater, etc. on the front glass 11, and ensure a field of view from a driver or others through the windshield. Here, the wiper arms 22 and 32 and the wiper blades constitute wiper members in the present invention.

In the front side of the vehicle body 10, a dash panel 12 which forms a framework of the vehicle body 10 is provided. The dash panel 12 is provided so as to cross the part between the DR-side and the AS-side of the vehicle body 10, and longitudinal ends of the dash panel 12 are respectively firmly fixed by welding or the like to a DR-side inside panel 13 and an AS-side inside panel 14, which form frameworks of the vehicle body 10. Here, all of the dash panel 12, the DR-side inside panel 13, and the AS-side inside panel 14 are high-strength members.

A DR-side first fixing part 12a and an AS-side first fixing part 12b are firmly fixed by welding or the like to the dash panel 12. Furthermore, a DR-side second fixing part 13a and a DR-side third fixing part 13b are firmly fixed by welding or the like to the DR-side inside panel 13. Furthermore, an AS-side second fixing part 14a and an AS-side third fixing part 14b are firmly fixed by welding or the like to the AS-side inside panel 14.

The DR-side wiper apparatus 20 is fixed by three-point support to the DR-side first fixing part 12a, the DR-side second fixing part 13a, and the DR-side third fixing part 13b, and the AS-side wiper apparatus 30 is fixed by three-point support to the AS-side first fixing part 12b, the AS-side second fixing part 14a, and the AS-side third fixing part 14b. Here, shaded parts in FIG. 1 show fixing parts (high-strength parts) of the vehicle body 10 to which the DR-side wiper apparatus 20 and the AS-side wiper apparatus 30 are fixed.

Here, the DR-side wiper motor 21 and the AS-side wiper motor 31 are similarly formed as shown in FIG. 1, and each of the wiper motors 21 and 31 is provided with three attachment portions "a", "b", and "c". The attachment portions "a", "b", and "c" of the DR-side wiper motor 21 are attached to the DR-side first fixing part 12a, the DR-side second fixing part 13a, and the DR-side third fixing part 13b respectively via fixation bolts (not shown). Also, the attachment portions "a", "b", and "c" of the AS-side wiper motor 31 are attached to the AS-side first fixing part 12b, the AS-side second fixing part 14a, and the AS-side third fixing part 14b respectively via fixation bolts (not shown).

Since the wiper motors 21 and 31 are similarly to each other in structure, the detailed structure of the DR-side wiper motor 21 will be representatively described by using drawings.

As shown in FIGS. 2 to 4, the DR-side wiper motor 21 is a so-called reverse-type wiper motor (reversing wiper motor). When the rotation direction, in other words, forward/reverse rotations of the DR-side wiper motor 21 are switched at predetermined timing, the DR-side wiper arm 22 (see FIG. 1) is subjected to swinging drive within a predetermined wiping range on the front glass 11. The DR-side wiper motor 21 is provided with a motor main body 40 and a speed reduction mechanism main body 50.

The motor main body 40 is provided with a motor case 41 formed into a bottomed tube shape by subjecting magnetic material such as steel plate to press working (deep-drawing working). In the motor case 41, a stator 42 formed into an approximately tubular shape is fixed, and coils 42a of three phases consisting of U-phase, V-phase, and W-phase are wound around the stator 42 in a predetermined coiling manner. A rotor 43 provided with a plurality of magnets 43a is rotatably provided in the inner side of the stator 42 with a predetermined gap. A rotation shaft 44 extends through and is fixed to a rotation center of the rotor 43, and the rotation shaft 44 is integrally rotated with the rotor 43. In this manner, the motor main body 40 according to the present embodiment employs a brushless motor. Here, the motor in the present invention is composed of the stator 42, the rotor 43, and the rotation shaft 44 housed in the motor case 41.

When timings for distributing electric power to the U-phase, V-phase, and W-phase coils 42a are switched by a controller 54b which is mounted in the inner side of a case cover 54 which will be described later, the rotor 43 (rotation shaft 44) is subjected to rotary drive with predetermined rotation torque, rotation speed, and rotation direction.

A distal end (lower side in FIG. 2) of the rotation shaft 44 projects from the motor case 41, and extends to the interior of the speed reduction mechanism main body 50. A worm 44a forming a speed reduction mechanism part 51 is integrally provided with a distal end of the rotation shaft 44, and integrally molded with an outer circumference of the rotation shaft 44 by rolling working or the like.

As shown in FIG. 4, a bottom portion 41a of the motor case 41 is formed into a stepped shape. An annular recess portion 41b hollowed toward the inner side of the motor case 41 is provided to the bottom portion 41a. By forming the annular recess portion 41b on the bottom portion 41a in this manner, a bearing housing portion 41c and a stator housing portion 41d are formed in the inner side of the motor case 41. As a result, the length along the axial direction of the motor main body 40 is shortened.

The stator housing portion 41d is annularly formed around the bearing housing portion 41c, and one axial end side (right side in the drawing) of the stator 42 is housed in the stator housing portion 41d. On the other hand, a metal (slide bearing) BR serving as a bearing is housed in the bearing housing portion 41c. The metal BR housed in the bearing housing portion 41c rotatably supports a base end of the rotation shaft 44.

Here, the stator 42 having the coils 42a wound therearound is a section in which heat is the most highly generated compared with other parts of the wiper motor in actuation of the motor main body 40. Therefore, in the present invention in which the stator 42 is disposed close to the outer periphery of the motor case 41, heat of the motor main body 40 (the stator 42) can be effectively dissipated to outside. Furthermore, since the motor main body 40 is mounted so as to be inclined at a predetermined angle with respect to the vehicle body 10 (see FIG. 1), as shown by broken line arrows of FIG. 4, when the DR-side wiper motor 21 is exposed to water such as rainwater "W", the annular recess portion 41b retains the rainwater "W". Because of this structure, heat of the motor main body 40 is effectively dissipated to outside. Note that, since the DR-side wiper motor 21 is exposed to water in rainy weather or the like (when the motor main body 40 is actuated), the cold rainwater "W" can flow into the annular recess portion 41b to take heat from it.

As shown in FIGS. 2, 3, and 5, the speed reduction mechanism main body 50 is provided with a speed-reducer case 52 in which the speed reduction mechanism part 51 is housed. The speed-reducer case 52 is provided with: a housing 53 which is formed into a bottomed shape by casting a melted aluminum material; and a resin-made cover 54 which is formed into an outer shape approximately similar to that of an opening portion of the housing 53, and closes the opening portion of the housing 53. The housing 53 and the case cover 54 adhere to each other via a seal member (not shown), and in this state, they are integrated by three fastening screws "S" (see FIG. 3). By virtue of this, rainwater and the like are prevented from entering the interior of the speed-reducer case 52.

In the housing 53, a worm wheel 55 forming the speed reduction mechanism part 51 is rotatably housed. The worm wheel 55 is formed of resin material such as plastic into an approximately disk shape, and gear teeth 55a meshed with the worm 44a are integrally provided to the outer periphery thereof. By virtue of this, the worm wheel 55 is rotated along the rotations of the rotation shaft 44.

A base end of an output shaft 56 composed of a steel rod is integrally rotatably fixed to a rotation center of the worm wheel 55 by serration joint (not shown), and the output shaft 56 is rotated by the speed reduction mechanism part 51. The rotation of the rotation shaft 44 is reduced by the worm 44a and the worm wheel 55 (the speed reduction mechanism part 51), and the reduced rotation is transmitted to the output shaft 56 with the enhanced torque.

As shown in FIG. 5, a sensor magnet SM formed into an approximately disk shape is attached to the rotation center of the worm wheel 55 and on the opposite side (lower side in the drawing) to a portion to which the output shaft 56 is fixed. The sensor magnet SM is opposed to a Hall IC 54g which will be described later. As a result, depending on the rotations of the sensor magnet SM, switching signals of rectangular waves (not shown) are output from the Hall IC 54g. Here, the switching signals from the Hall IC 54g are input to a CPU (not shown) which forms the controller 54b. As a result, the CPU detects the rotation state (rotation position, etc.) of the output shaft 56 and carries out switching control, etc. of the rotation directions of the output shaft 56 (rotation shaft 44) in accordance with the detection of the rotation state.

The output shaft 56 is turnably supported by a boss portion 53b which is integrally provided with a bottom wall portion 53a of the housing 53. A tubular bearing member 53c is attached to the inner side of the boss portion 53b so that the output shaft 56 can smoothly rotate without rattling. A distal end of the output shaft 56 extends to outside via the boss portion 53b, and the base end of the output shaft 56 is housed in the housing 53.

As shown in FIG. 2, a push nut 56a is attached to the output shaft 56, thereby preventing the output shaft 56 from rattling in the axial direction with respect to the housing 53.

A serration portion and a male thread portion (both are not shown) are integrally provided with the distal end of the output shaft 56. A base end of the DR-side wiper arm 22 (see FIG. 1) is fixed to the serration portion so as not to be relatively rotatable. Furthermore, a fastening nut (not shown) is screw-coupled to the male thread portion with which the DR-side wiper arm 22 attached to the serration portion, thereby preventing the DR-side wiper arm 22 from being detached from the serration portion.

As shown in FIGS. 2 and 5, a plurality of heat dissipation fins 53d is integrally provided with the outer side of the bottom wall portion 53a of the housing 53. In this embodiment, the three heat dissipation fins 53d are provided so as to extend in the direction orthogonal to the axial direction of the output shaft 56 and the axial direction of the rotation shaft 44 at equal intervals. Furthermore, the heat dissipation fins 53d are provided to an opposed portion 53e of the bottom wall portion 53a, which will be described later, and which is opposed to the thermally-conductive member 60, so that heat of the thermally-conductive member 60 can be efficiently dissipated to outside.

As just described, since the housing 53 is integrally provided with the heat dissipation fins 53d while the housing 53 is made of aluminum which is excellent in heat dissipation performance, not to mention weight reduction of the DR-side wiper motor, heat transmitted to the housing 53 is effectively quickly dissipated to outside.

Since the housing 53 is integrally provided with the three attachment portions "a", "b", and "c" disposed so as to surround the housing 53, and a tetragon "T" (see FIG. 3) intersecting with central parts of the attachment portions "a", "b", and "c" is formed by virtual lines, most part of the DR-side wiper motor 21 is within the tetragon "T". In this manner, most of the DR-side wiper motor 21 is within the inner side of the tetragon "T" which is formed by the attachment portions "a", "b", and "c". Therefore, as shown in FIG. 1, the DR-side wiper motor 21 and the AS-side wiper motor 31, which are the same in shape as each other, can be disposed to be opposed to each other, and supported by three points in DR-side and AS-side narrow spaces of the vehicle body 10, which are in mirror-symmetrical relationship with each other. Therefore, it is not necessary to distinctively manufacture the DR-side wiper motor 21 and the AS-side wiper motor 31, and this leads to cost reduction.

The case cover 54 is integrally provided with a connector connecting portion 54a to which an external connector (not shown) provided to the vehicle body 10 is connected. A plurality of terminals (not shown) is insert-molded on the connector connecting portion 54a, and includes terminals for drive currents and a rotation sensor. First ends of the terminals are electrically connected to respective terminals (not shown) of the external connector, and second ends of the terminals are electrically connected to the controller 54b which is fixed to the inner side of the case cover 54. Therefore, the controller 54b is also housed in the speed-reducer case 52. The controller 54b is configured to control the forward/reverse rotations of the output shaft 56 by controlling the forward/reverse rotations of the rotation shaft 44.

Here, as shown in FIG. 3, the connector connecting portion 54a to be connected to the external connector is directed in a direction opposite to the attachment portion "b", in other words, toward the lower side in the drawing. By directing the connector connecting portion 54a in a direction opposite to the attachment portion "b" in this manner, as shown in FIG. 1, the connector connecting portion 54a is directed toward the space which comparatively has allowance with the DR-side wiper motor 21 and the AS-side wiper motor 31 mounted on the vehicle body 10. Therefore, a vehicle body manufacturer, etc. are enabled to easily carry out an inserting operation of the external connector. This leads to improvement in maintainability of the DR-side wiper motor 21.

As shown in FIG. 5, the controller 54b controls the DR-side wiper motor 21, and it is composed of a circuit board 54c and a plurality of electronic components (a pair of capacitors 54d and 54e, a FET module 54f, the Hall IC 54g) mounted on the circuit board 54c. Among these electronic components, in other words, the pair of capacitors 54d and 54e, the FET module (drive element) 54f, and the Hall IC 54g, particularly the FET module 54f is composed of switching elements of a drive system which switch, at high speed, the state of electric power distribution to the coils 42a of the three phases. Therefore, the FET module 54f is an electronic component in which heat is the most highly generated when the motor main body 40 is actuated.

The FET module 54f constitutes an electronic component in the present invention, and among the electronic components, heat should be efficiently dissipated from it. Note that the present embodiment shows that only the pair of capacitors 54d and 54e, the FET module 54f, and the Hall IC 54g are mounted on the circuit board 54c, but in practice, electronic components (not shown, a CPU serving as a control element which controls the FET module 54f and the like) other than them are also mounted on the circuit board 54c.

As shown in FIGS. 5 to 7, the FET module 54f is formed into a flat plate shape, and the plurality of switching elements (FET) is provided in it. The FET module 54f is provided with a front surface SF1 and a back surface SF2, the front surface SF1 is opposed to the case cover 54, and the back surface SF2 is opposed to the circuit board 54c. In other words, the FET module 54f is disposed between the circuit board 54c and the case cover 54.

On the back surface SF2 of the FET module 54f, a plurality of connection terminals TM are provided, and these connection terminals TM are electrically connected to printed wiring (not shown) of the circuit board 54c. The FET module 54f is located close to the heat dissipation fins 53d among the electronic components mounted on the circuit board 54c, and fixed to the inner side of the case cover 54 via the thermally-conductive member 60 by a pair of fixation screws S1 (see FIG. 7). Here, in FIG. 7, in order to clarify the positional relation between the FET module 54f and the thermally-conductive member 60, the circuit board 54c is omitted, and the thermally-conductive member 60 is shaded.

The thermally-conductive member 60 made of aluminum which is excellent in heat dissipation performance, is provided between the front surface SF1 of the FET module 54f and the inner side of the case cover 54. The thermally-conductive member 60 is formed by bending an aluminum plate so as to have an approximately S-shape in cross section, and the thermally-conductive member 60 is provided with a first flat portion 61, a perpendicular portion 62, and a second flat portion 63.

The surface area of the first flat portion 61 is set to be larger than the surface area of the second flat portion 63, and the front surface SF1 of the FET module 54f adheres to the first flat portion 61 via heat dissipation grease (not shown). As a result, heat generated at the FET module 54f is efficiently released (transmitted) to the thermally-conductive member 60. The first flat portion 61 is fixed to the inner side of the case cover 54 by a pair of fixation screws S2 (see FIG. 7).

The perpendicular portion 62 is provided on the opposite side (right side in FIG. 5) to the output shaft 56 of the first flat portion 61, and functions to dispose the second flat portion 63 on same side as the heat dissipation fins 53d of the FET module 54f. The second flat portion 63 is thermally-conductively connected to the opposed portion 53e of the housing 53 via a heat dissipation sheet 64. In this manner, the thermally-conductive member 60 is provided between the FET module 54f and the housing 53 so as to release heat generated by the FET module 54f to the heat dissipation fins 53d of the housing 53.

Here, the heat dissipation sheet 64 is made of, for example, silicone having thermal conductivity and elastically deformed when external force is applied to it. Before the case cover 54 is attached to the housing 53, the heat dissipation sheet 64 is pasted on the second flat portion 63 as shown by a broken line arrow "m" of FIG. 7. Therefore, by attaching the case cover 54 to the housing 53 and fastening the fastening screws "S" (see FIG. 3) with predetermined fastening torque, the heat dissipation sheet 64 is provided between the second flat portion 63 of the thermally-conductive member 60 and the opposed portion 53e of the housing 53, and elastically deformed and thermally-conductively closely attached to both the thermally-conductive member 60 and the housing 53.

As described above, by providing the thermally-conductive member 60 between the FET module 54f and the housing 53 and providing the heat dissipation sheet 64 between the second flat portion 63 and the opposed portion 53e in this manner, as shown by a thick broken line arrow (thermally-conductive path) of FIG. 6, heat generated by the FET module 54f is efficiently dissipated to outside via the thermally-conductive member 60, the heat dissipation sheet 64, the opposed portion 53e, and the heat dissipation fins 53d.

In addition, as shown in FIG. 5, a grease-scatter preventing plate 70 formed of resin material such as plastic into a flat plate shape is provided between the speed reduction mechanism part 51 and the controller 54b. As a result, slide grease (not shown) applied to the speed reduction mechanism part 51 is prevented from being scattered to the circuit board 54c and causing the controller 54b to, for example, malfunction.

As described above in detail, according to the DR-side wiper motor 21 of the first embodiment, since the thermally-conductive member 60 configured to release heat of the FET module 54f to the housing 53 is provided between the housing 53 and the FET module 54f which forms the controller 54b, heat of the FET module 54f can be dissipated to outside via the thermally-conductive member 60 and the housing 53.

Therefore, since the housing 53 is made of aluminum which is excellent in thermal conductivity, and surface area is larger than that of a conventional cooling fin member, heat of the FET module 54f can be effectively dissipated. As a result, the DR-side wiper motor 21 can be improved in both size and cooling efficiency.

Furthermore, although a cooling fin member has been required in the conventional structure, since there is no need to insert a cooling fin member into the case cover 54 in the present invention, the case cover 54 can be simplified and easily molded. As a result, the DR-side wiper motor 21 can be improved in assembly workability.

Furthermore, according to the DR-side wiper motor 21 of the first embodiment, since the heat dissipation fins 53d configured to dissipate heat from the thermal conductivity member 60 to outside is provided to the opposed portion 53e of the housing 53 to the thermally-conductive member 60, the heat dissipation performance of the housing 53 can be further improved by further increasing the surface area of the housing 53. As a result, the DR-side wiper motor 21 can be further reduced in size.

Furthermore, since the heat dissipation sheet 64 having thermal conductivity is provided between the housing 53 and the thermally-conductive member 60, heat generated by the FET module 54f can be more efficiently released to the housing 53.

Next, the second embodiment of the present invention will be described in detail with reference to the drawings. In addition, members the same as those of the first embodiment are denoted by the same reference numbers as those of the first embodiment, and the detail descriptions thereof are omitted here. Also in the second embodiment, on behalf of them, the detail structure of the DR-side wiper motor will be described with reference to the drawings.

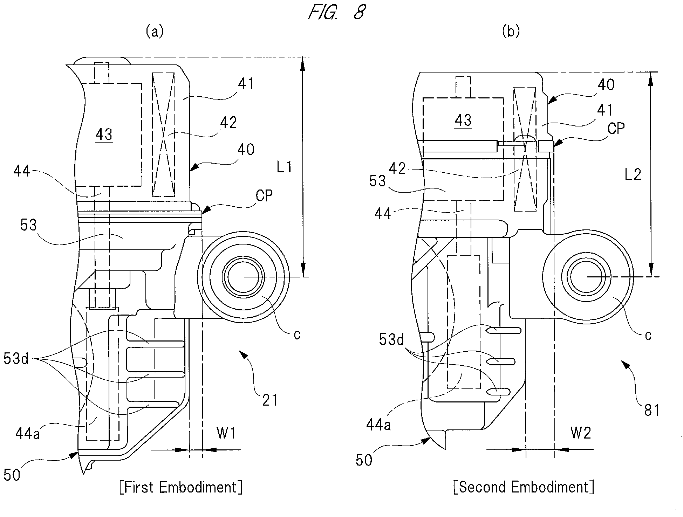

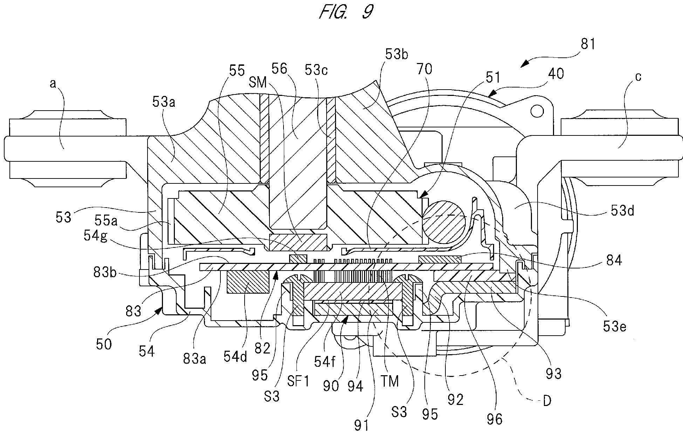

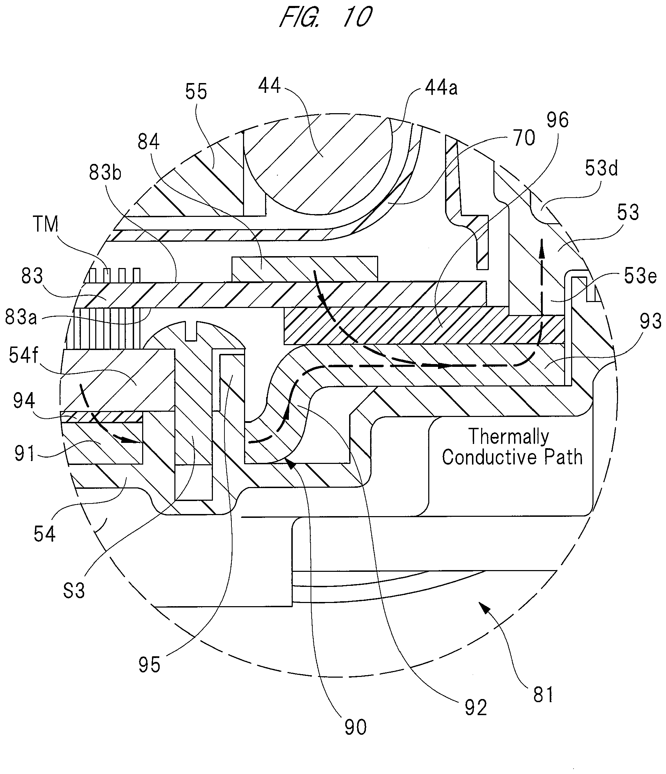

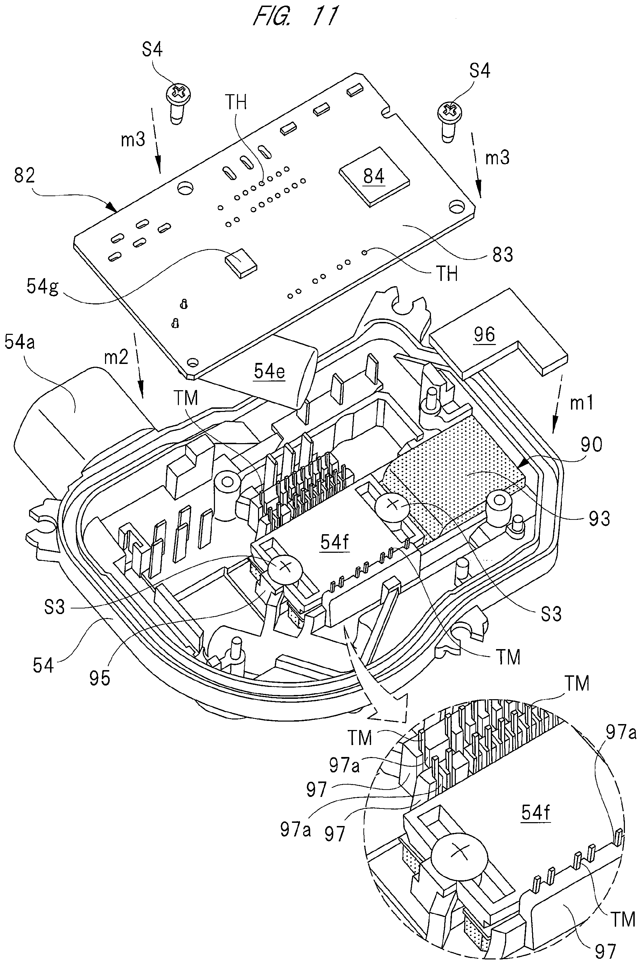

FIG. 8 is a partial enlarged view comparing the size of the wiper motor of the first embodiment with the size of a wiper motor of a second embodiment; FIG. 9 is a drawing of the wiper motor according to the second embodiment of the present invention, corresponding to FIG. 5; FIG. 10 is a partial enlarged view of a portion surrounded by a broken-line circle "D" of FIG. 9; and FIG. 11 is an exploded perspective view showing the inner side of a case cover of the wiper motor of FIG. 9.

As shown in FIG. 8, a DR-side wiper motor 81 according to the second embodiment has a further downsized structure compared with the DR-side wiper motor 21 of the first embodiment. Specifically, a coupling portion CP of the motor case 41 and the housing 53 is positioned at an approximately midpoint defined between the stator 42 and the rotor 43 in an axial direction. More specifically, axial first ends of the stator 42 and the rotor 43 are housed in the motor case 41, and axial second ends of the stator 42 and the rotor 43 are housed in the housing 53. When this structure is employed, heat can be dissipated via the housing 53 from the stator 42 having the coils 42a wound therearound, which the most highly generate heat in actuation of the motor main body 40. As a result, the length of the motor main body 40 along the axial direction of the rotation shaft 44 from the attachment portion "c" is a length L1 in the first embodiment, and in the second embodiment, in a length L2 shorter than the length L1 (L2<L1).

Furthermore, in the second embodiment, a portion in which the worm 44a of the housing 53 is housed is shorter in width than that of the first embodiment. Specifically, the position of the coupling portion CP of the motor main body 40 and the speed reduction mechanism main body 50 is defined as a reference position, and the distance from the reference position to the heat dissipation fins 53d of the housing 53 is a distance W1 in the first embodiment, and a distance W2 in the second embodiment, which is larger than the distance W1 (W2>W1).

In this manner, the frame in the second embodiment is smaller as a whole than the first embodiment. Therefore, the DR-side wiper motor 81 of the second embodiment is more easily placed within the tetragon "T" (see FIG. 3) passing through the central parts of the attachment portions "a", "b", and "c". In order to realize above described downsizing, as shown in FIG. 9, the DR-side wiper motor 81 of the second embodiment causes a controller 82 and a thermally- conductive member 90 to be different in structure from those of the first embodiment.

As shown in FIGS. 9 and 10, the controller 82 controls the DR-side wiper motor 81 and it is provided with a circuit board 83, which is provided with a first surface 83a and a second surface 83b; the FET module (electronic component) 54f; and a CPU (electronic component) 84. Here, the FET module 54f is a drive element in the present invention, and the CPU 84 is a control element in the present invention. Note that, on the first surface 83a and the second surface 83b of the circuit board 83, as well as the first embodiment, the capacitor 54d (see FIG. 9), the capacitor 54e (see FIG. 11), the Hall IC 54g, etc. which are other electronic components, are mounted.

The FET module 54f is mounted on the first surface 83a of the circuit board 83, in other words, on the same side as the case cover 54 of the circuit board 83 via a plurality of connection terminals TM. On the other hand, the CPU 84 is mounted on the second surface 83b of the circuit board 83, in other words, on the same side as the grease scatter preventing plate 70 of the circuit board 83 via a plurality of connection terminals (not shown). In this manner, the FET module 54f and the CPU 84 are respectively mounted on the surfaces mutually opposed to each other, so as to sandwich the circuit board 83.

As shown in FIG. 9, the FET module 54f is mounted on an approximately central portion of the circuit board 83. As a result, the FET module 54f is opposed to the output shaft 56 in the axial direction thereof. Furthermore, the FET module 54f is disposed within a rotation radius which is centered on the output shaft 56 of the worm wheel 55. Since the FET module 54f is located close to the output shaft 56 in this manner, the bulging amount of the circuit board 83 in a direction intersecting with the output shaft 56 is reduced, and as shown in FIG. 8, A portion of the housing 53, in which the worm 44a is provided, is shorter in width than other part of the housing.

On the other hand, as shown in FIGS. 9 and 11, the CPU 84 is mounted on a portion of the circuit board 83, which is close to an end along the longitudinal direction thereof, and close to the heat dissipation fins 53d of the housing 53. In other words, the CPU 84 is provided to the portion closer to the heat dissipation fins 53d than the FET module 54f.

The thermally-conductive member 90 made of ceramic excellent in heat dissipation performance is provided between the front surface SF1 of the FET module 54f and the inner side of the case cover 54. In other words, the thermally-conductive member 90 is provided to the first surface 83a of the circuit board 83. Here, the thermally-conductive member 90 is formed by a sintered body which is thermally compacted powder of, for example, aluminum oxide, and is excellent in thermal conductivity as well as the first embodiment. Furthermore, the thermally-conductive member 90 is formed so that the cross section thereof has an approximately S-shape as well as the first embodiment, and provided with a first flat portion 91, a perpendicular portion 92, and a second flat portion 93.

The surface area of the first flat portion 91 and the surface area of the second flat portion 93 are set to be approximately the same surface areas. The front surface SF1 of the FET module 54f adheres by the entire surface to the first flat portion 91 via a first heat dissipation sheet (elastic member) 94. As a result, heat of the FET module 54f is efficiently released (transmitted) to the thermally-conductive member 90 via the first heat dissipation sheet 94.

Here, the first flat portion 91 is fixed to the inner side of the case cover 54 together with the FET module 54f by a pair of fixation screws S3. Note that, as shown in FIG. 9, toppling preventing projections 95, which prevent the fixation screws S3 from being toppled, are integrally provided on the inner side of the case cover 54. As a result, the fixation screws S3 can be easily straightly screw-coupled to the case cover 54, and, consequently, assembly workability of the DR-side wiper motor 81 is improved. Furthermore, as shown in FIG. 11, the plurality of connection terminals TM of the FET module 54f are retained by a plurality of terminal retaining portions 97, which are integrally provided with the inner side of the case cover 54. The plurality of terminal retaining portions 97 are provided with retaining grooves 97a in which the plurality of connection terminals TM is inserted. As a result, the FET module 54f can be fixed to the inner side of the case cover 54 without rattling. Furthermore, when the FET module 54f is attached to the inner side of the case cover 54, the FET module 54f can be prevented from being erroneously assembled with respect to the case cover 54.

Via a second heat dissipation sheet (elastic member) 96, the second flat portion 93 adheres to the first surface 83a of the part that is close to the end of the circuit board 83 along the longitudinal direction. Furthermore, as shown in FIG. 9, the thickness of the second heat dissipation sheet 96 is set to have a thickness that is thicker than the thickness of the first heat dissipation sheet 94. As a result, the second heat dissipation sheet 96 can be sufficiently elastically deformed. Therefore, dimensional errors of the circuit board 83 and the thermally-conductive member 90 can be absorbed, and inappropriate attachment of the circuit board 83 with respect to the thermally-conductive member 90 can be prevented. Therefore, peel-off of the first heat dissipation sheet 94 from the FET module 54f and peel-off of the second heat dissipation sheet 96 from the circuit board 83 can be prevented. Note that the first surface 83a of the second heat dissipation sheet 96 is elastically deformed and is in contact with respect to the opposed portion 53e of the housing 53.

As shown in FIG. 9, the second heat dissipation sheet 96 is opposed to the CPU 84 so as to sandwich the circuit board 83. Therefore, heat generated by the CPU 84 is transmitted to the second heat dissipation sheet 96 via the circuit board 83. Here, since heat generated by the FET module 54f is transmitted to the first heat dissipation sheet 94 without the intermediation of the circuit board 83, heat dissipation efficiency thereof is extremely good. On the other hand, since heat generated by the CPU 84 is transmitted to the second heat dissipation sheet 96 via the circuit board 83 as described above, heat dissipation efficiency thereof is tend to be somewhat reduced. On the other hand, this reduction in the heat dissipation efficiency is compensated for by disposing the CPU 84 so that the CPU 84 is closer to the heat dissipation fins 53d of the housing 53 than the FET module 54f. Therefore, also at the CPU 84, sufficient heat dissipation efficiency can be obtained.

In this manner, in the DR-side wiper motor 81 of the second embodiment, the thermally-conductive member 90 is provided between the FET module 54f and the CPU 84 and the housing 53, and the second heat dissipation sheet 96 is provided between the second flat portion 93 and the opposed portion 53e. Therefore, as shown by thick broken line arrows (thermally-conductive paths) of FIG. 10, heat generated by the FET module 54f and the CPU 84 is efficiently dissipated to outside via the heat dissipation sheets 94 and 96, the thermally-conductive member 90, the opposed portion 53e, and the heat dissipation fins 53d.

In order to attach the circuit board 83 to the inner side of the case cover 54, as shown in FIG. 11, the thermally-conductive member 90 and the FET module 54f are firstly disposed on the inner side of the plurality of terminal retaining portions 97. At this point, the plurality of connection terminals TM of the FET module 54f are inserted in the retaining grooves 97a of the terminal retaining portions 97. Then, the thermally-conductive member 90 and the FET module 54f are fixed to the inner side of the case cover 54 by using the pair of fixation screws S3. Then, as shown by a broken line arrow m1, the second heat dissipation sheet 96 is pasted on the second flat portion 93 of the thermally-conductive member 90. Note that, in the illustration, the second heat dissipation sheet 96 has an approximately L-shape; however, a heat dissipation sheet of another shape such as square may be used depending on the shape of the first surface 83a of the circuit board 83 (presence/ absence of electronic components).

Then, as shown by a broken line arrow m2, the circuit board 83 on which the plurality of electronic components excluding the FET module 54f are mounted is caused to face a predetermined position of the inner side of the case cover 54. Here, the connection terminals TM of the FET module 54f are accurately inserted in through holes TH provided in the circuit board 83. Then, as shown by a broken line arrow m3, the circuit board 83 is fixed to the inner side of the case cover 54 by using fixation screws S4. Then, the connection terminals TM of the FET module 54f are electrically connected to the circuit board 83 by a connection means such as soldering, and attachment of the circuit board 83 to the inner side of the case cover 54 is completed.

Also in the DR-side wiper motor 81 of the second embodiment formed in the above manner, working effects similar to those of the above described first embodiment can be exerted. In addition to that, in the second embodiment, since heat of the CPU 84 can be also released to the housing 53 via the thermally-conductive member 90, thermal runaway, etc. of the CPU 84 can be more reliably prevented.

Furthermore, in the second embodiment, the controller 82 is provided with the circuit board 83 on which the FET module 54f and the CPU 84 are mounted, the FET module 54f is mounted on the first surface 83a of the circuit board 83, the CPU 84 is mounted on the second surface 83b of the circuit board 83, the thermally-conductive member 90 is provided to the first surface 83a of the circuit board 83, and the CPU 84 is disposed to be closer to the heat dissipation fins 53d of the housing 53 more than the FET module 54f. As a result, the heat transmission path of the CPU 84 and the heat transmission path of the FET module 54f are enabled to be the heat transmission paths having approximately equivalent heat transmission efficiency, and the CPU 84 is also enabled to obtain sufficient heat dissipation efficiency.

The present invention is not limited to the above described embodiments, and it goes without saying that various modifications can be made without departing from the gist thereof. For example, in the above described embodiments, the thermally-conductive member 60 is made of aluminum, and the thermally-conductive member 90 is made of ceramic. However, the present invention is not limited thereto, and, for example, the thermally-conductive members 60 and 90 may be made of copper which is excellent in thermal conductivity. Also, reverse to the above description, the thermally-conductive member 60 may be made of ceramic, and the thermally-conductive member 90 may be made of aluminum.

Furthermore, the above described embodiments show the three heat dissipation fins 53d integrally provided with the housing 53. However, the present invention is not limited thereto, and the heat dissipation fins may be omitted if the housing has sufficient heat dissipation performance. In this case, the shape of the mold for molding the housing can be simplified. Furthermore, if the heat dissipation performance is required to be further improved, four or more heat dissipation fins may be provided.

Furthermore, the above described embodiments show that the heat dissipation sheet 64, the first heat dissipation sheet 94, and the second heat dissipation sheet 96 are employed as elastic members having thermal conductivity. However, the present invention is not limited to these embodiments, and can employ heat dissipation grease which is set to have comparatively high viscosity. Furthermore, if the connection between the housing 53 and the thermally- conductive members 60 and 90 is high, and sufficient thermal conduction can be carried out, the heat dissipation sheet 64 and the second heat dissipation sheet 96 may be omitted. Also, if the connection between the FET module 54f and the thermally- conductive member 90 is high, and sufficient thermal conduction can be carried out, the first heat dissipation sheet 94 may be omitted.

Furthermore, the above described embodiments show the cases in which the rotation sensor provided on the circuit board 54c or 83 and opposed to the sensor magnet SM is the Hall IC 54g. However, the present invention is not limited thereto, and another rotation sensor such as a MR sensor or a rotary encoder IC may be used.

Furthermore, the above described embodiments show the cases in which the brushless motor is employed as the motor main body 40. However, the present invention is not limited thereto, and a brushed motor can be employed.

### INDUSTRIAL APPLICABILITY

A wiper motor is used to drive a wiper member, which forms part of a wiper apparatus provided on a vehicle such as automotive vehicle, and used to wipes a windshield.

## Claims

1. A wiper motor (21, 31) which subjects a wiper member to swinging drive, comprising:
a motor having a rotation shaft (44);
a speed reduction mechanism part (51) for reducing a rotation of the rotation shaft;
a controller (54b) having a circuit board (54c) on which a plurality of electronic components are mounted, and adapted to control a rotation of the motor;
a housing (53) in which the speed reduction mechanism part is housed;
a case cover (54) having an inner face to which the controller is attached, and closing an opening of the housing; and
a thermally-conductive member (60) adapted to release heat to the housing from the electronic components,
**characterized in that**:
the thermally-conductive member has: a first flat portion (61) sandwiched between the inner face of the case cover and at least one electronic component mounted on the circuit board; and a second flat portion (63) disposed between the housing and the case cover.

2. The wiper motor according to claim 1, wherein the housing has a portion opposed to the thermally-conductive member, and provided with a heat dissipation fin (53d) for releasing heat to outside from the thermally-conductive member.

3. The wiper motor according to claim 1, wherein an elastic member (64; 94, 96) having thermal conductivity is provided between the housing and the thermally-conductive member.

4. The wiper motor according to claim 1, wherein the electronic components includes a drive element (54f) for driving the motor, and a control element (84) for controlling the drive element, and the thermally-conductive member is adapted to release heat to the housing from the drive element and the control element.

5. The wiper motor according to claim 1, wherein
the drive element is mounted on a first surface of the circuit board;
the control element is mounted on a second surface of the circuit board;
the thermally-conductive member is provided on the same side as the first surface of the circuit board; and
the control element is located closer to the housing than the drive element.

6. The wiper motor according to claim 1, wherein
the thermally-conductive member is made of aluminum.

7. The wiper motor according to claim 1, wherein
the thermally-conductive member is made of ceramic.

8. The wiper motor according to claim 1, wherein
the thermally-conductive member is formed by bending a flat plate,
the thermally-conductive member has a perpendicular portion (62) intervening between the first and second flat portions, and releasing heat of the first flat portion to the housing.

## Patentansprüche

1. Wischermotor (21, 31), der ein Wischerelement einem Schwingungsantrieb unterwirft, umfassend:
einen Motor mit einer Drehwelle (44);
ein Mechanismusteil (51) zur Drehzahlreduzierung zum Reduzieren einer Drehung der Drehwelle;
eine Steuerung (54b) mit einer Leiterplatte (54c), auf der eine Vielzahl von elektronischen Komponenten montiert und zum Steuern einer Drehung des Motors angepasst sind;
ein Gehäuse (53), in dem der Mechanismusteil zur Drehzahlreduzierung untergebracht ist;
einen Gehäusedeckel (54) mit einer Innenfläche, an der die Steuerung befestigt ist, und der eine Öffnung des Gehäuses schließt; und
ein wärmeleitfähiges Element (60), das so angepasst ist, dass es Wärme von den elektronischen Komponenten an das Gehäuse abgibt,
**dadurch gekennzeichnet, dass**:
das wärmeleitfähige Element aufweist: einen ersten flachen Abschnitt (61), der zwischen der Innenfläche des Gehäusedeckels und mindestens einer elektronischen Komponente, die auf der Leiterplatte montiert ist, angeordnet ist; und einen zweiten flachen Abschnitt (63), der zwischen dem Gehäuse und dem Gehäusedeckel angeordnet ist.

2. Wischermotor nach Anspruch 1, wobei das Gehäuse einen dem wärmeleitfähigen Element gegenüberliegenden Abschnitt aufweist und mit einer Wärmeableitungsrippe (53d) zum Freisetzen von Wärme nach außen von dem wärmeleitfähigen Element bereitgestellt ist.

3. Wischermotor nach Anspruch 1, wobei ein elastisches Element (64; 94, 96) mit einer Wärmeleitfähigkeit zwischen dem Gehäuse und dem wärmeleitfähigen Element bereitgestellt ist.

4. Wischermotor nach Anspruch 1, wobei die elektronischen Komponenten ein Antriebselement (54f) zum Antreiben des Motors und ein Steuerelement (84) zum Steuern des Antriebselements einschließen, und das wärmeleitfähige Element so angepasst ist, dass es Wärme vom Antriebselement und dem Steuerelement an das Gehäuse abgibt.

5. Wischermotor nach Anspruch 1, wobei
das Antriebselement auf einer ersten Oberfläche der Leiterplatte montiert ist;
das Steuerelement auf einer zweiten Oberfläche der Leiterplatte montiert ist;
das wärmeleitfähige Element auf der gleichen Seite wie die erste Oberfläche der Leiterplatte bereitgestellt ist; und
das Steuerelement näher am Gehäuse angeordnet ist als das Antriebselement.

6. Wischermotor nach Anspruch 1, wobei
das wärmeleitfähige Element aus Aluminium hergestellt ist.

7. Wischermotor nach Anspruch 1, wobei
das wärmeleitfähige Element aus Keramik hergestellt ist.

8. Wischermotor nach Anspruch 1, wobei
das wärmeleitfähige Element durch Biegen einer flachen Platte gebildet wird,
wobei das wärmeleitfähige Element einen senkrechten Abschnitt (62) aufweist, der zwischen dem ersten und zweiten flachen Abschnitt eingreift, und Wärme des ersten flachen Abschnitts an das Gehäuse abgibt.

## Revendications

1. Moteur d'essuie-glace (21, 31) qui soumet un élément d'essuie-glace à un entraînement oscillant, comprenant :
un moteur ayant un arbre de rotation (44) ;
une partie de mécanisme de réduction de vitesse (51) pour réduire une rotation de l'arbre de rotation ;
un dispositif de commande (54b) ayant une carte de circuit (54c) sur laquelle une pluralité de composants électroniques sont montés, et adapté pour commander une rotation du moteur ;
un boîtier (53) dans lequel est logée la partie de mécanisme de réduction de vitesse ;
un couvercle de carter (54) ayant une face intérieure à laquelle est attaché le dispositif de commande, et fermant une ouverture du boîtier ; et
un élément thermiquement conducteur (60) adapté pour dégager de la chaleur vers le boîtier depuis les composants électroniques,
**caractérisé en ce que** :
l'élément thermiquement conducteur comporte : une première portion plate (61) prise en sandwich entre la face intérieure du couvercle de carter et au moins un composant électronique monté sur la carte de circuit ; et une seconde portion plate (63) disposée entre le boîtier et le couvercle de carter.

2. Moteur d'essuie-glace selon la revendication 1, dans lequel le boîtier comporte une portion opposée à l'élément thermiquement conducteur, et pourvue d'une ailette de dissipation de chaleur (53d) pour dégager de la chaleur vers l'extérieur depuis l'élément thermiquement conducteur.

3. Moteur d'essuie-glace selon la revendication 1, dans lequel l'élément élastique (64 ; 94, 96) ayant une conductibilité thermique est disposé entre le boîtier et l'élément thermiquement conducteur.

4. Moteur d'essuie-glace selon la revendication 1, dans lequel les composants électroniques incluent un élément d'entraînement (54f) pour entraîner le moteur, et un élément de commande (84) pour commander l'élément d'entraînement, et l'élément thermiquement conducteur est adapté pour dégager de la chaleur vers le boîtier depuis l'élément d'entraînement et l'élément de commande.

5. Moteur d'essuie-glace selon la revendication 1, dans lequel
l'élément d'entraînement est monté sur une première face de la carte de circuit ;
l'élément de commande est monté sur une seconde surface de la carte de circuit ;
l'élément thermiquement conducteur est disposé sur le même côté que la première surface de la carte de circuit ; et
l'élément de commande est situé plus près du boîtier que l'élément d'entraînement.

6. Moteur d'essuie-glace selon la revendication 1, dans lequel
l'élément thermiquement conducteur est composé d'aluminium.

7. Moteur d'essuie-glace selon la revendication 1, dans lequel
l'élément thermiquement conducteur est composé de céramique.

8. Moteur d'essuie-glace selon la revendication 1, dans lequel
l'élément thermiquement conducteur est formé en pliant une plaque plate,
l'élément thermiquement conducteur comporte une portion perpendiculaire (62) intervenant entre les première et seconde portions plates, et dégageant de la chaleur de la première portion plate vers le boîtier.
